# FASCICULE DE BREVET EUROPEEN

(11) **EP 2 721 199 B1**
(45) Date de publication et mention de la délivrance du brevet: **23.09.2015**
(21) Numéro de dépôt: 12730833.6
(22) Date de dépôt: 12.06.2012
(51) Int. Cl.: C25B 9/04, C25B 9/08, C25B 9/18, H01M 8/02

(54) **MODULE INTERCONNECTEUR DE REALISATION SIMPLIFIEE POUR DISPOSITIF D'ELECTROLYSE DE L'EAU A HAUTE TEMPERATURE**
LEICHT HERZUSTELLENDES VERBINDUNGSMODUL FÜR EINE HOCHTEMPERATUR- WASSERELEKTROLYSEVORRICHTUNG
EASILY PRODUCED INTERCONNECTING MODULE FOR A HIGH-TEMPERATURE WATER ELECTROLYSIS DEVICE

(30) Priorité: 16.06.2011 FR 1155275
(43) Date de publication de la demande: 23.04.2014
(73) Titulaire: Commissariat à l'Énergie Atomique et aux Énergies Alternatives, 75015 Paris (FR)
(72) Inventeur: PLANQUE, Michel, F-38180 Seyssins (FR)
(74) Mandataire: Ahner, Philippe
(86) Numéro de dépôt international: PCT/EP2012/061131
(87) Numéro de publication internationale: WO 2012/171925

(56) Documents cités:
- BE-A4- 1 004 689
- FR-A1- 2 786 027
- US-A- 4 788 110
- LI X ET AL: "Review of bipolar plates in PEM fuel cells: Flow-field designs", INTERNATIONAL JOURNAL OF HYDROGEN ENERGY, ELSEVIER SCIENCE PUBLISHERS B.V., BARKING, GB, vol. 30, no. 4, 1 mars 2005 (2005-03-01), pages 359-371, XP027750461, ISSN: 0360-3199 [extrait le 2005-03-01] cité dans la demande

## Description

### DOMAINE TECHNIQUE

L'invention concerne un dispositif d'électrolyse de l'eau à haute température (EHT) appelé aussi électrolyse de vapeur d'eau à haute température (EVHT).

Elle a trait plus particulièrement à réalisation plus simple d'interconnecteurs fluidique et électrique d'un électrolyseur EHT selon la demande de brevet PCT/EP2011/053728.

### ART ANTÉRIEUR

Un électrolyseur de l'eau à haute température (EHT) comprend au moins une cellule électrochimique élémentaire formée d'un électrolyte, d'une cathode et d'une anode, l'électrolyte étant intercalé entre les l'anode et la cathode. L'électrolyte est étanche au gaz, isolant électronique et conducteur ionique. Les électrodes (anode et cathode) sont en matériau poreux et conducteurs électroniques.

Un électrolyseur EHT comprend également des dispositifs d'interconnexion fluidique et électrique qui sont en contact électrique avec une ou des électrodes. Ces dispositifs d'interconnexion assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact. Un gaz drainant peut en outre être injecté en entrée du compartiment anodique pour évacuer l'oxygène produit. L'injection d'un gaz drainant a pour fonction supplémentaire de jouer le rôle de régulateur thermique.

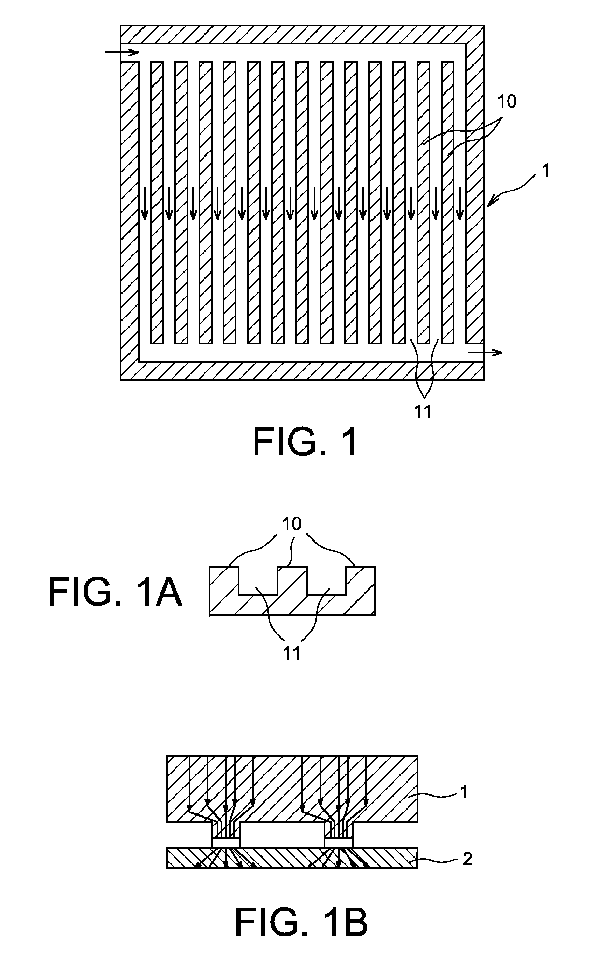

On a représenté en figures 1, 1A et 1B, une plaque à canaux 1 couramment utilisée en tant que dispositif d'interconnexion. L'amenée ou la collecte du courant électrique à l'électrode est réalisée par les dents ou nervures 10 qui sont en contact mécanique direct avec l'électrode concernée. L'amenée de vapeur d'eau à la cathode (ou de gaz drainant à l'anode) est symbolisée par les flèches en figure 1. La collecte de l'hydrogène produit à la cathode (ou de l'oxygène produit à l'anode) est faite par les canaux 11 qui débouchent dans une connexion fluidique, couramment appelée clarinette, commune à l'empilement de cellules. La structure de ce type de dispositif d'interconnexion est faite pour réaliser un compromis entre les deux fonctions d'amenée et collecte (gaz/courant).

Les inconvénients majeurs de cette plaque à canaux peuvent être résumés comme suit.

Tout d'abord, elle ne permet pas d'utiliser la surface d'une cellule d'électrolyse de manière homogène. En effet, la réaction électrochimique se faisant prés de l'interface entre électrode et électrolyte, et nécessitant la présence sur le même lieu du gaz, des électrons et des espèces impliquées, les zones sous les dents 10 du collecteur sont faciles à alimenter en électrons, mais difficiles à alimenter en gaz. Les paramètres contraignants sont la perméabilité de l'électrode en contact, son épaisseur et la largeur de la dent 10. De même, la zone sous le canal 11 est difficile à alimenter en électrons, les électrodes existantes à ce jour ayant une conductivité électrique faible. Les paramètres contraignants sont la conductivité électrique, l'épaisseur et la largeur du canal 11. L'inventeur est d'avis que le ratio R entre la surface d'amenée/collecte de courant et la surface d'amenée de vapeur d'eau ou de collecte des gaz produits est un paramètre indicateur de l'utilisation réelle de la surface de cellule. Dans le cas d'une plaque d'interconnection à canaux 1, le ratio R calculé comme ci-dessous est souvent inférieur à 50 %.

R = 1/ (1+ w/L), où w est la largeur du canal 11 et L la largeur de la dent 10.

Ensuite, cette structure de plaque 1 implique des zones de production différenciées avec certaines zones dans lesquelles les densités de production et donc les densités de courant peuvent être très fortes, ceci pour une densité moyenne faible, et donc des sources de dégradation de performances localisées. Ceci est illustré au niveau local (échelle millimétrique) en figure 1B sur lesquelles on peut voir les lignes de courant très fortes représentées qui sont localisées au niveau des nervures 10. De même, en considérant la surface d'électrode, les lignes de courant sont plus fortes en amont qu'en aval du fait de l'évolution de la teneur en eau dans le flux de gaz entre l'amont et l'aval des canaux.

De même, cette structure de plaque 1 implique des inhomogénéités d'alimentation en vapeur d'eau des canaux 11 et obligent à une forte suralimentation de cette vapeur d'eau (on entre un surplus d'eau correspondant à plus 100 % de l'eau consommée) pour obtenir une alimentation pour l'ensemble des canaux 11 stable et homogène, ce qui rend difficile l'atteinte d'un taux d'utilisation en vapeur d'eau élevé. Le conditionnement de cette vapeur et sa mise en pression ont un impact non négligeable sur la consommation d'énergie associée à l'électrolyseur.

En outre, il existe un risque mécanique de mise en flexion d'une cellule s'il y a un décalage géométrique important entre des dents d'une plaque interconnectrice 1 du côté de l'anode et celles d'une plaque du côté de la cathode, ou s'il existe des défauts de planéité des dents pouvant poinçonner la cellule et la fissurer. Pour éviter ce risque, il faut une très grande précision dans le montage relatif des plaques de part et d'autre de la cellule et une très grande qualité de réalisation des dents.

Par ailleurs, du côté de l'anode, la structure par canaux avec une entrée et une sortie n'a de raison d'être que lorsqu'un gaz drainant est utilisé pour évacuer l'oxygène produit vers la sortie. Le conditionnement de ce gaz drainant a lui aussi un coût énergétique significatif.

Enfin, cette structure de plaques nécessite une épaisseur de matière importante pour la zone de collection des gaz produits et une mise en forme (usinage) qui peuvent se révéler prohibitives. L'emploi de tôles minces et de l'emboutissage sont utilisées mais limitent de fait les possibilités de réalisation pour la largeur unitaire de dent et le pas entre dents. Aussi, l'inventeur considère qu'avec une telle plaque interconnectrice 1 à canaux, la réduction de l'inhomogénéité des courants électriques amenés à chaque cellule ne peut qu'être limitée.

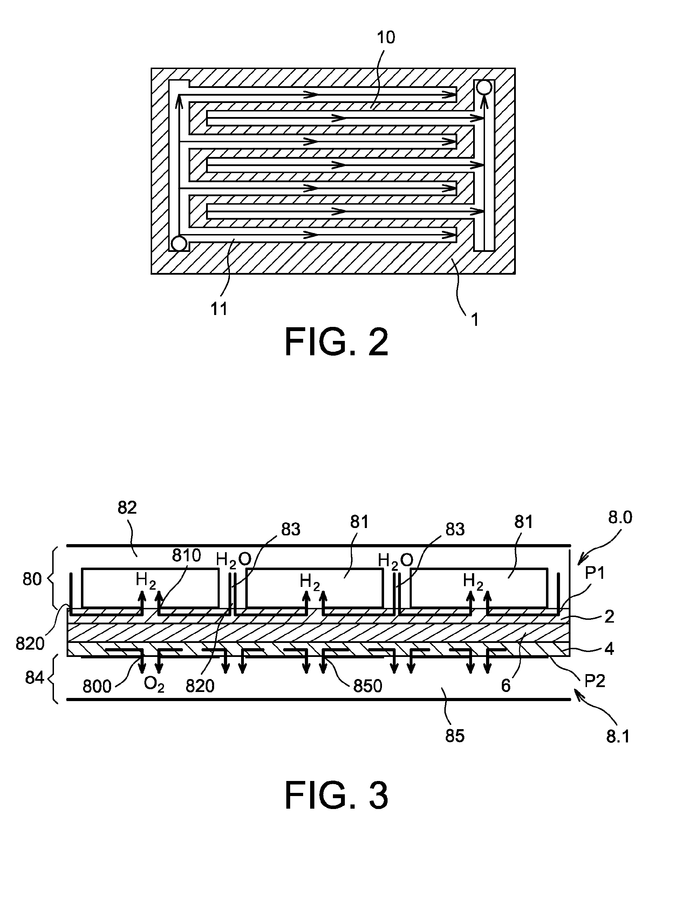

Une autre plaque interconnectrice 1' a déjà été proposée [1]. Elle est représentée en figure 2 avec la circulation du fluide représentée par les flèches : sa structure est de type interdigitée. Elle ne résout pas le problème de la flexion mécanique évoqué pour la plaque 1 et peut engendrer un arrachement hydraulique de l'électrode avec laquelle elle est en contact.

Pour s'affranchir au moins en partie des inconvénients des plaques interconnectrices existantes à la cathode d'un dispositif d'électrolyse de l'eau à haute température qui viennent d'être décrites, la demanderesse a proposé dans la demande de brevet internationale déposée sous le numéro PCT/EP2011/053728, une nouvelle architecture à fonctionnement plus homogène.

Ainsi, selon cette demande, il est prévu un dispositif d'électrolyse de l'eau à haute température, comprenant :
- au moins une cellule d'électrolyse élémentaire formée d'une cathode, d'une anode, et d'un électrolyte intercalé entre la cathode et l'anode,
- un premier dispositif formant un interconnecteur électrique et fluidique consistant en une pièce métallique délimitée par au moins un plan P1, ladite pièce métallique comprenant intérieurement deux chambres, superposées l'une sur l'autre et une pluralité de trous répartis sur la surface, sensiblement perpendiculaires au plan et divisés en deux groupes, dont un groupe de trous débouche à la fois sur le plan P1 et directement dans la chambre adjacente et l'autre groupe des trous débouche à la fois sur le plan P1 et dans la chambre la plus éloignée par l'intermédiaire de canaux, le plan P1 du premier interconnecteur étant en contact mécanique avec le plan de la cathode.

Une partie d'un tel compartiment cathodique par laquelle on amène la vapeur d'eau est ainsi constituée d'une des deux chambres et un groupe de trous. L'autre groupe de trous et l'autre chambre constituent une autre partie du compartiment cathodique par laquelle on récupère l'hydrogène produit à la cathode.

Avec un tel dispositif, on s'affranchit avantageusement des inconvénients de la traditionnelle architecture de plaque interconnectrice à canaux selon l'état de l'art telle que présentée ci-dessus.

Autrement dit, on peut obtenir grâce à un dispositif selon la demande PCT/EP2011/053728, comparativement aux architectures d'électrolyseur EHT selon l'état de l'art présenté précédemment, une densité de production uniforme par cellule d'électrolyse et un meilleur taux d'utilisation (ou de conversion) de vapeur d'eau.

En effet, grâce à la pluralité de trous débouchant sur le plan de la cathode, on permet tout d'abord à toute la surface de cellule d'avoir un comportement électrique homogène en tout point avec une résistance de contact électrique limitée entre cathode et premier interconnecteur. Autrement dit, la distribution du courant à la cathode est optimale.

De même, du fait de la superposition des chambres et de la pluralité des trous, on peut injecter la vapeur d'eau directement de manière homogène en tout point de la cathode au travers d'un groupe de trous, ce qui a pour effet, contrairement à l'état de l'art présenté précédemment, une limitation de la surtension de concentration.

Dans cette même demande PCT/EP2011/053728, il est prévu de combiner judicieusement le premier interconnecteur à la cathode avec un deuxième interconnecteur à l'anode consistant lui également en une pièce métallique délimitée par au moins un plan P2, ladite pièce métallique comprenant intérieurement une chambre et une pluralité de trous répartis sur la surface, sensiblement perpendiculaires au plan et débouchant à la fois sur ce dernier P2 et dans la chambre, le plan P2 du deuxième interconnecteur étant en contact mécanique avec le plan de l'anode.

Ainsi, on définit selon cette demande PCT/EP2011/053728, un électrolyseur (EHT) à empilement de cellules d'électrolyse élémentaires formées chacune d'une cathode, d'une anode et d'un électrolyte intercalé entre la cathode et l'anode, dans laquelle un module interconnecteur comprenant un premier et un deuxième interconnecteur est agencée entre deux cellules élémentaires adjacentes, tel que le plan P1 du premier interconnecteur est en contact mécanique avec la cathode d'une des deux cellules élémentaires et le plan P2 du deuxième interconnecteur est en contact mécanique avec l'anode de l'autre des deux cellules élémentaires.

Il a été envisagé de réaliser chaque module interconnecteur en assemblant des plaques métalliques massives et en soudant des tubes pour réaliser les canaux de communication fluidique du premier interconnecteur à la cathode, pour amener soit la vapeur d'eau en contact avec le plan P1 de cathode depuis la chambre du dessus soit récupérer l'hydrogène produit à celle-ci vers la chambre du dessus, c'est-à-dire celle superposée à la chambre adjacente au plan de cathode.

Les inconvénients d'une telle réalisation peuvent être énumérés comme suit :
- coût de matière première métallique élevé,
- complexité des assemblages à réaliser, notamment un nombre de soudures élevé, avec un coût élevé des usinages nécessités,
- poids non négligeable.

Le but de l'invention est donc de proposer une solution qui permette de réaliser tout ou partie d'un module interconnecteur selon la demande de précitée PCT/EP2011/053728 sans les inconvénients précités.

### EXPOSÉ DE L'INVENTION

Pour ce faire l'invention a pour objet un dispositif formant un interconnecteur électrique et fluidique pour l'électrolyse de l'eau à haute température consistant en une pièce métallique délimitée par au moins un plan P1, ladite pièce métallique comprenant intérieurement deux chambres superposées l'une sur l'autre par rapport audit plan P1 et une pluralité de trous répartis sur la surface, sensiblement perpendiculaires au plan et divisés en deux groupes, dont un premier groupe de trous débouche à la fois sur le plan P1 et directement dans la chambre adjacente au plan P1 et un second groupe des trous débouche à la fois sur le plan P1 et dans la chambre la plus éloignée par l'intermédiaire de canaux, le plan P1 de l'interconnecteur étant destiné à venir en contact mécanique avec le plan d'une cathode d'une cellule d'électrolyse élémentaire formée d'une cathode, d'une anode, et d'un électrolyte intercalé entre la cathode et l'anode.

Selon l'invention, la pièce métallique comprend deux tôles, embouties en partie, la première des deux tôles étant percée dans sa partie plane de manière à former le premier groupe de trous et dans ses parties embouties de manière à former le second groupe de trous, chaque embouti des deux tôles étant percé et réalisé en formant un tronc de cône, les emboutis de la première tôle étant de formes complémentaires avec ceux de la deuxième tôle, lesdites première et deuxième tôles étant assemblées entre elles par emboitement mutuel des emboutis en définissant les canaux, l'espace délimité par les parties non embouties de la première et deuxième tôles définissant la chambre adjacente au plan P1.

Grâce à l'invention, on s'affranchit des inconvénients d'un assemblage de plaques massives avec soudure de tubes.

Dans le cadre de l'invention, on entend par interconnecteur fluidique et électrique, un système de connexion d'amenée ou de collecte de courant et d'amenée et de collecte d'un fluide à une électrode d'une cellule d'électrolyse. Ainsi, un dispositif d'électrolyse selon l'invention peut comprendre une seule cellule d'électrolyse avec un premier interconnecteur en contact avec sa cathode et un deuxième interconnecteur décrit ci-dessous en contact avec son anode. De même, comme décrit par la suite, dans un empilement de cellules d'électrolyse selon l'invention, un module interconnecteur peut comprendre un premier interconnecteur en contact avec la cathode d'une cellule d'électrolyse élémentaire et un deuxième interconnecteur en contact avec l'anode de la cellule d'électrolyse adjacente.

Selon un mode de réalisation, la pièce métallique comprend une troisième tôle, également emboutie en partie et soudée à la deuxième tôle, les emboutis de la troisième tôle étant non percés et en appui contre la deuxième tôle pour rigidifier ledit interconnecteur et pour permettre le passage du courant électrique, l'espace délimité par les parties non embouties de la deuxième et troisième tôles définissant la chambre superposée à la chambre adjacente au plan P1.

La première tôle est réalisée de préférence à partir d'une tôle plane selon une étape de poinçonnage suivie d'une étape d'emboutissage.

De préférence encore, la deuxième tôle est réalisée à partir d'une tôle plane selon une étape d'emboutissage suivie d'une étape de repoussage.

Selon une variante de réalisation, la chambre adjacente au plan P1 constitue la chambre par laquelle la vapeur d'eau est amenée et la chambre superposée constitue la chambre de collecte de l'hydrogène produit par l'électrolyse.

L'invention concerne également un module interconnecteur comprenant un premier interconnecteur tel que décrit ci-dessus, et un deuxième interconnecteur électrique et fluidique consistant en une pièce métallique délimitée par au moins un plan P2, ladite pièce métallique comprenant intérieurement une chambre et une pluralité de trous répartis sur la surface, sensiblement perpendiculaires au plan P2 et débouchant à la fois sur ce dernier P2 et dans la chambre,
dans lequel la pièce métallique du deuxième interconnecteur comprend deux tôles, dites respectivement quatrième et cinquième tôles, la quatrième tôle étant plane en définissant le plan P2 et percée des trous répartis sur la surface, tandis que la cinquième tôle est emboutie en partie et soudée à la quatrième tôle, les emboutis de la cinquième tôle étant non percés et en appui contre la quatrième tôle pour rigidifier ledit deuxième interconnecteur et pour permettre le passage du courant électrique, l'espace délimité par la quatrième tôle qui est plane et les parties non embouties de la cinquième tôle définissant la chambre sur laquelle débouche la pluralité des trous du deuxième interconnecteur,
dans lequel les troisième et cinquième tôles sont soudées entre elles en définissant le module interconnecteur.

Avantageusement, les troisième et cinquième tôles présentent une forme identique l'une à l'autre et de préférence, sont identiques (même forme, mêmes dimensions, même matériau constitutif).

De préférence, les troisièmes et cinquième tôle sont soudées dos-à-dos, avec leurs emboutis en regard individuellement les uns avec les autres à la fois pour rigidifier tout le module et pour permettre le passage du courant électrique depuis la première tôle jusqu'à la cinquième tôle.

Toutes les tôles sont avantageusement soudées par transparence laser.

L'invention concerne également un dispositif d'électrolyse de l'eau à haute température comprenant :
- un empilement de cellules d'électrolyse élémentaires formées chacune d'une cathode, d'une anode et d'un électrolyte intercalé entre la cathode et l'anode, et
- une pluralité de modules interconnecteurs décrits comme ci-dessus, chaque module interconnecteur étant agencé entre deux cellules élémentaires adjacentes tel que le plan P1 du premier interconnecteur est en contact mécanique avec la cathode d'une des deux cellules élémentaires et le plan P2 du deuxième interconnecteur est en contact mécanique avec l'anode de l'autre des deux cellules élémentaires le plan P2 du deuxième interconnecteur.

L'invention concerne enfin un ensemble de production d'hydrogène comprenant une pluralité de dispositifs d'électrolyse comme mentionné ci-dessus.

### BRÈVE DESCRIPTION DES DESSINS

D'autres avantages et caractéristiques ressortiront mieux à la lecture de la description détaillée faite ci-dessous en référence aux figures parmi lesquelles :
- la figure 1 est une vue schématique de face d'une plaque interconnectrice d'un électrolyseur EHT selon l'état de l'art,
- la figure 1A est une vue de détail en coupe d'une plaque interconnectrice selon la figure 1,
- la figure 1B est une vue analogue à la figure 1A montrant les lignes de courant parcourant la plaque,
- la figure 2 est une vue schématique de face d'une autre plaque interconnectrice d'un électrolyseur selon l'état de l'art,
- la figure 3 est une vue schématique en coupe d'un dispositif d'électrolyse selon la demande de brevet PCT/EP2011/053728 à une seule cellule d'électrolyse,
- la figure 4 est une vue schématique en coupe d'un dispositif d'électrolyse selon la demande de brevet précitée PCT/EP2011/053728 à empilement de cellules d'électrolyse,
- la figure 5 une vue en coupe partielle en perspective d'un dispositif d'électrolyse selon la demande de brevet précitée PCT/EP2011/053728 à empilement de cellules d'électrolyse et réalisé selon l'invention,
- la figure 6 est une vue en coupe partielle transversale d'un dispositif d'électrolyse selon la demande de brevet précitée PCT/EP2011/053728 à empilement de cellules d'électrolyse et réalisé selon l'invention,
- la figure 6A est une vue de détail de la figure 6.

### EXPOSÉ DÉTAILLÉ DE MODES DE RÉALISATION PARTICULIERS

Les plaques interconnectrices 1, 1' d'électrolyseurs EHT selon l'état de l'art et représentées en figures 1, 1A, 1B et 2 ont été commentées en détail en préambule. Elles ne sont donc pas décrites ci-après.

Les symboles et les flèches de parcours de vapeur d'eau, hydrogène et d'oxygène sont montrés dans l'ensemble des figures à des fins de clarté.

L'électrolyse à haute température selon l'invention peut être réalisée à des températures d'au moins 450°C, typiquement comprises entre 700°C et 1000°C.

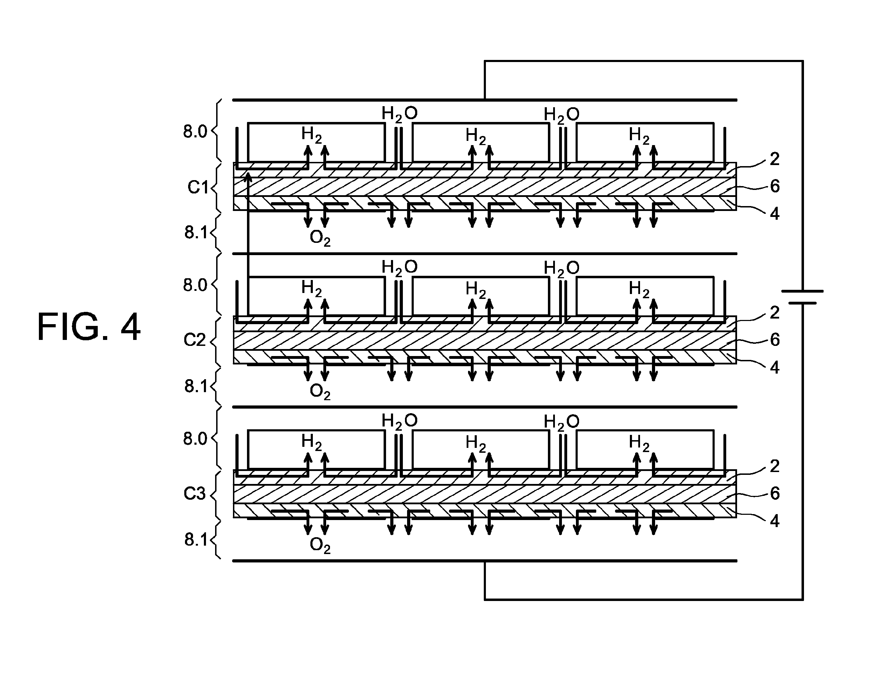

Tel que représenté en figures 3 et 4, un dispositif d'électrolyse selon la demande de brevet précitée PCT/EP2011/053728 comprend une cellule d'électrolyse élémentaire formée d'une cathode 2, d'une anode 4, et d'un électrolyte 6 intercalé entre la cathode et l'anode.

Typiquement, les caractéristiques d'une cellule d'électrolyse élémentaire convenant à l'invention peuvent être celles indiquées comme suit dans le tableau :

| **Cellule d'électrolyse** | **Unité** | **Valeur** |
|---|---|---|
| **Cathode 2** | | |
| *Matériau constitutif* | | Ni-YZS |
| *Epaisseur* | *µm* | *315* |
| *Conductivité thermique* | *W m*⁻¹*K*⁻¹ | *13.1* |
| *Conductivité électrique* | Ω⁻¹*m*⁻¹ | *10⁵* |
| *Porosité* | | *0.37* |
| *Perméabilité* | *m*² | *10⁻¹³* |
| *Tortuosité* | | *4* |
| *Densité de courant* | *A m*⁻² | *5300* |

| **Anode 3** | | |
|---|---|---|
| *Matériau constitutif* | | LSM |
| *Epaisseur* | *µm* | *20* |
| *Conductivité thermique* | *W m*⁻¹*K*⁻¹ | *9. 6* |
| *Conductivité électrique* | Ω⁻¹ *m*⁻¹ | *110⁴* |
| *Porosité* | | *0.37* |
| *Perméabilité* | *m*² | *10⁻¹³* |
| *Tortuosité* | 3.0 | *4* |
| *Densité de courant* | *Am*⁻² | *2000* |

| **Electrolyte 4** | | |
|---|---|---|
| *Matériau constitutif* | | YSZ |
| *Epaisseur* | *µm* | *15* |
| *Résistivité* | Ω*m* | *0.42* |

Un premier dispositif 8.0 formant un interconnecteur électrique et fluidique consiste en une pièce métallique 80 délimitée par au moins un plan P1 en contact avec une cathode 2.

La pièce métallique 80 comprend intérieurement deux chambres 81, 82 superposées l'une sur l'autre et une pluralité de trous 810, 820 sensiblement perpendiculaires au plan P1 et divisés en deux groupes. Par trou perpendiculaire au plan P1, on entend un trou dont l'axe est perpendiculaire au plan P1. Sa surface est donc parallèle au plan P1.

Un des groupes de trous 810 débouche à la fois sur le plan P1 et directement dans la chambre adjacente 81 et l'autre groupe des trous 820 débouche à la fois sur le plan P1 et dans la chambre 82 la plus éloignée par l'intermédiaire de canaux 83.

Le plan P1 du premier interconnecteur 8.0 est en contact mécanique avec le plan de la cathode 2.

Tel que représenté en figure 3, on injecte directement la vapeur d'eau par la chambre 82 la plus éloignée du plan P1 en vue de la réaction d'électrolyse.

Comme illustré à l'aide de la flèche et des symboles H₂ et H₂O en figure 3, la vapeur d'eau injectée par cette chambre 82 circule ensuite par les canaux 83, puis est transformée progressivement en hydrogène dans la porosité de la cathode 2 et grâce à l'amenée uniforme de courant électrique sur toute la surface de cellule par l'interconnecteur 8.0.

Une partie d'hydrogène est prélevée de manière uniforme par chacun des trous 810 de l'autre groupe puis évacuée par la chambre 81 sur laquelle les trous 810 débouchent.

Le dispositif d'électrolyse selon la demande de brevet précitée PCT/EP2011/053728 tel que représenté en figure 3 comprend, du côté anode 4, un deuxième interconnecteur 8.1.

Cet interconnecteur 8.1 consiste également en une pièce métallique 84 délimitée par un plan P2 en contact mécanique direct avec le plan de l'anode 4.

La pièce métallique 84 comprenant intérieurement une chambre 85 et une pluralité de trous 850 répartis sur la surface, sensiblement perpendiculaires au plan et débouchant à la fois sur ce plan P2 et dans la chambre 85.

Comme illustré à l'aide de la flèche et du symbole O₂ en figure 3, l'oxygène produit à l'anode 4 est collecté par chacun des trous 850 puis est évacuée par la chambre 85.

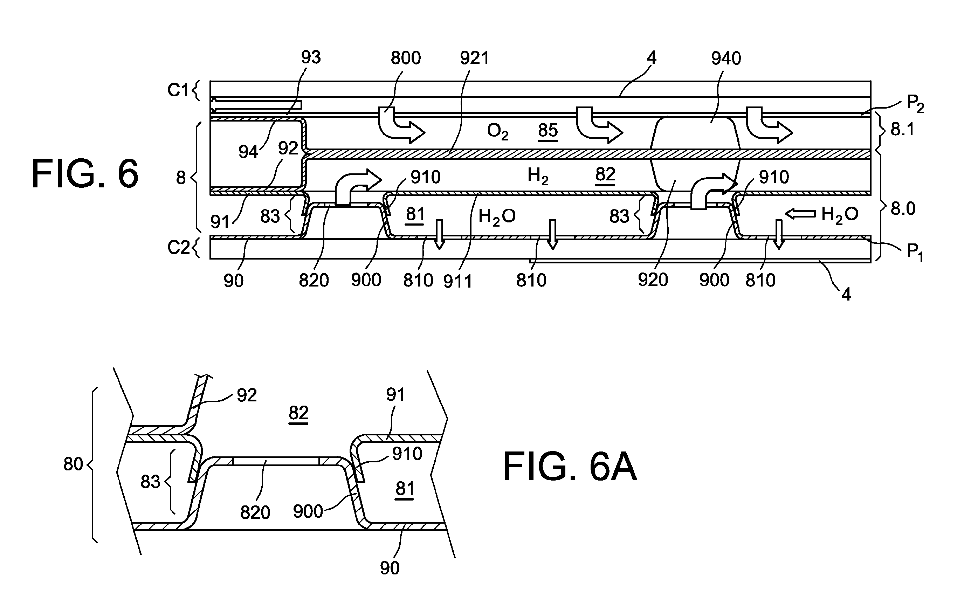

On a représenté schématiquement en figure 6 un empilement de trois cellules d'électrolyse C1, C2, C3 avec les interconnecteurs selon la demande de brevet précitée PCT/EP2011/053728.

Plus exactement, le courant est amené et récupéré aux bornes de l'empilement constituées d'une part par un premier dispositif interconnecteur 8.0 en contact avec la cathode de la cellule C1 et d'autre part par un deuxième dispositif interconnecteur 8.1 en contact avec la cellule C3.

Un module interconnecteur 8 constitué d'un deuxième interconnecteur 8.1 et d'un premier interconnecteur 8.0 est agencé entre la cellule C1 et la cellule C2, le deuxième interconnecteur 8.1 étant en contact avec le plan P2 de l'anode de la cellule C1 et le premier interconnecteur 8.0 étant en contact avec le plan P1 de la cathode de la cellule C2 adjacente.

Cela est réalisé de manière identique entre les deux cellules C2 et C3 adjacentes.

La pièce métallique 84 constituant le deuxième interconnecteur 8.1 est en contact mécanique direct avec l'anode 4, comme représenté en figure 3.

Le plan P2 de ce deuxième interconnecteur 8.1 est en contact mécanique direct avec le plan de l'anode comme représenté en figure 3.

Les trous 850 de collecte de l'oxygène produit, dans ce mode de réalisation, sont alignés en alternance en quinconce exactement comme l'ensemble des trous 810, 820 d'amenée de vapeur d'eau et de collecte d'oxygène respectivement.

L'électrolyseur (EHT) à empilement qui vient d'être décrit peut tout à faite fonctionner sous une pression élevée, typiquement à une pression de l'ordre de 30 bars.

Pour réaliser chaque premier interconnecteur 8.0 ou deuxième interconnecteur 8.1, les inventeurs ont envisagé :
- d'assembler des plaques métalliques massives, c'est-à -dire fabriquées dans une pièce brute,
- de souder des tubes à deux plaques massives pour la réalisation des canaux 83 dont la fonction est soit d'alimenter en vapeur d'eau à haute température une cathode 2 depuis la chambre du dessus 82 comme représenté en figures 3 et 4, soit de récupérer l'hydrogène H2 produit à la cathode 2 pour l'amener dans la chambre du dessus comme représenté ci-après.

Cette solution ne peut être retenue car complexe en particulier avec des usinages onéreux et des soudures nombreuses notamment pour les tubes, coûteuse et générant un poids d'ensemble non négligeable.

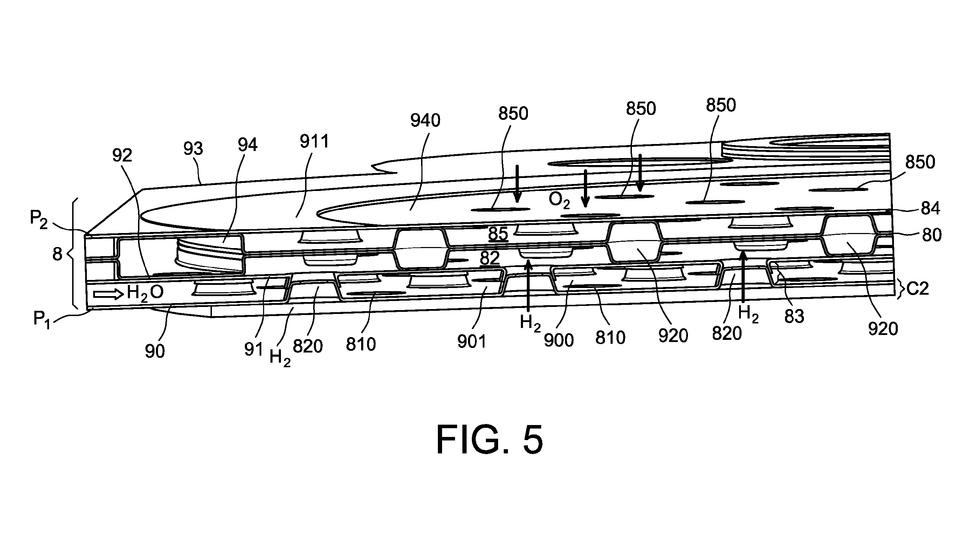

Aussi, selon l'invention, on prévoit un module interconnecteur 8 entre deux cellules d'électrolyse adjacentes tel que montré aux figures 5 et 6 et qui est réalisé uniquement à partir de tôles minces métalliques embouties et percées et assemblées entre elles avec un nombre minimum de soudures.

On précise ici que contrairement au mode de réalisation selon les figures 3 et 4 selon lequel la chambre du dessus 82 est celle par laquelle la vapeur d'eau est alimentée et la chambre 81 adjacente au plan de cathode est celle de récupération de l'hydrogène produit, le mode de réalisation selon l'invention et les figures 5 et 6 prévoit une alimentation de la vapeur d'eau par la chambre 81, i-e celle adjacente au plan de cathode 2 d'une cellule, et la récupération de l'hydrogène produit est faite par la chambre 82 du dessus, i-e celle superposée à la chambre 81.

On peut ainsi, selon ce mode de réalisation des figures 5 et 6, amener la vapeur d'eau à hautes températures sous pression élevée depuis l'intérieur d'une enveloppe étanche adaptée pour contenir de la vapeur d'eau contenant au plus 1 % d'hydrogène et dans laquelle est logée l'empilement de cellules d'électrolyse comme décrit et revendiqué dans la demande de brevet PCT/EP2011/053723 au nom de la demanderesse. Typiquement, la vapeur d'eau à haute température sous pression est amenée depuis la périphérie de l'interconnecteur 8.0 dans la chambre adjacente au plan de cathode comme montré par les flèches horizontales en figures 5 et 6.

Selon l'invention, afin d'éviter la complexité d'assemblage et le temps nécessaire avec des tubes soudés, on prévoit que la pièce métallique 80 est réalisée à partir de deux tôles embouties 90, 91 en partie et une troisième tôle 92 également emboutie en partie.

La première 90 des deux tôles est percée dans sa partie plane de manière à former un premier groupe de trous 810 débouchant sur le plan P1 et dans ses parties embouties de manière à former un second groupe de trous 820..

Comme mieux représenté en figure 6A, chaque embouti 900, 910 des deux tôles 90, 91 est percé et réalisé en formant un tronc de cône. Les emboutis 900, 910 percés et en forme de tronc de cône de la première tôle 90 sont de formes complémentaires avec ceux de la deuxième tôle 91.

Les première 90 et deuxième 91 tôles sont assemblées entre elles par emboitement mutuel des emboutis 900, 910 percés et en forme de tronc de cône.

Les canaux 83 formés par l'intérieur des emboutis 900, 910 et débouchant grâce aux trous 820 sont ceux traversés par l'hydrogène produit qui se dirige ainsi vers la chambre superposée 82 à la chambre 81.

En outre, l'espace délimité par les parties non embouties 901, 910 de la première et deuxième tôles c'est-à-dire planes, définit la chambre 81 adjacente au plan P1.

Pour obtenir la première tôle 90, on peut à partir de la tôle plane 901, réaliser une étape de poinçonnage des deux groupes de trous 810, 820 puis réaliser une étape d'emboutissage pour former les troncs de cône 900.

Pour obtenir la deuxième tôle 91, on peut à partir de la tôle plane 911, réaliser une étape d'emboutissage de matière pour former un cylindre puis réaliser une étape de repoussage pour former les troncs de cône 910.

L'assemblage par emboitement entre troncs de cônes 900 et 910 selon l'invention, que l'on peut aussi désigner par une liaison « cône-cône » permet un gain substantiel en temps de réalisation et en simplicité par rapport à une solution de soudage de tubes à deux plaques massives.

Cet assemblage entre troncs de cônes 900, 910 selon l'invention garantit la réalisation de l'étanchéité nécessaire entre vapeur d'eau amenée H20 et hydrogène H2 produit et récupéré, lorsque l'empilement de cellules d'électrolyse sera soumis à des efforts de compression pour assurer le bon contact électrique entre les différents éléments. Ainsi, il n'y a pas lieu de réaliser de soudure entre la première 90 et deuxième 91 tôles. Autrement dit, l'assemblage par emboitement métal /métal entre troncs de cônes 900, 910 est homogène et la liaison étanche est assurée par le serrage des troncs de cônes 900 et 910. Autrement dit encore, l'assemblage entre troncs de cône 900, 910 selon l'invention permet une récupération de l'hydrogène étanche vis-à-vis de l'alimentation en vapeur d'eau à moindre coût.

La troisième tôle 92 de la pièce métallique 80 selon l'invention est également emboutie en partie et soudée à la deuxième tôle 91.

Les emboutis 920 de la troisième tôle 92 sont non percés et sont en appui contre la deuxième tôle 91 pour rigidifier ledit interconnecteur 8.0 et pour permettre le passage du courant électrique ou autrement dit la continuité électrique à travers l'empilement de l'électrolyseur EHT selon l'invention.

L'espace délimité par les parties non embouties 911, 921 respectivement de la deuxième 91 et troisième 92 tôles définit la chambre 82 superposée à la chambre 81 adjacente au plan P1.

La pièce métallique 84 du deuxième interconnecteur 8.1 est réalisée à partir de deux tôles 93, 94, dites respectivement quatrième et cinquième tôles.

La quatrième tôle 93 est plane et définit le plan P2. Elle est ainsi percée des trous 850 répartis sur la surface.

La cinquième tôle 94 est emboutie en partie et soudée à la quatrième tôle 93. Les emboutis 940 de la cinquième tôle sont non percés et en appui contre la quatrième tôle 93 pour rigidifier ledit deuxième interconnecteur et pour permettre le passage du courant électrique.

L'espace délimité par la quatrième tôle 93 qui est plane est les parties non embouties 941 de la quatrième et cinquième tôle 94 définissent la chambre 85 sur laquelle débouche la pluralité des trous 850 du deuxième interconnecteur.

Les troisième 92 et cinquième 94 tôles sont soudées entre elles et définissent ainsi le module interconnecteur 8.

Comme visible en figure 5, les troisième 92 et cinquième 94 tôles sont identiques et sont soudées dos-à-dos. Leurs emboutis respectifs 920, 940 sont ainsi en regard individuellement les uns avec les autres à la fois pour rigidifier tout le module et pour permettre le passage du courant électrique depuis la première tôle jusqu'à la cinquième tôle. Autrement dit, cela permet d'avoir un module interconnecteur 8 capable de résister aux efforts de compression soumis à l'empilement de cellules d'électrolyse et d'assurer la continuité électrique à travers tous les modules inetrconnecteurs et donc à travers tout l'empilement de cellules lors du fonctionnement de l'électrolyseur EHT aux hautes températures.

Toutes les soudures entre tôles 91, 92, 94, 93 réalisées à la fabrication, en dehors de tout fonctionnement de l'électrolyseur haute température peuvent être peu nombreuses. De préférence, elles sont réalisées selon une technique de laser par transparence, ce qui est possible du fait de la très faible épaisseur des tôles, typiquement de l'ordre de 0.2 mm.

Toutes les tôles 91, 92, 94, 93 sont avantageusement en acier ferritique à 20% de chrome, de préférence en CROFER® 22APU à base Nickel de type Inconel®600 ou Haynes® 230 ou le F18TNb dans des épaisseurs typiquement comprises entre 0.1 et 1mm.

Le module interconnecteur selon l'invention 8 qui vient d'être décrit présente plusieurs avantages :
- bonne étanchéité garantie: les première et deuxième tôles même dans des faibles épaisseurs (typiquement de l'ordre de 2/10mm) en assemblage cône sur cône garantissent une étanchéité de bonne qualité,
- grande compacité : les tôles fines peuvent avoir une faible profondeur d'emboutissage avec typiquement une hauteur totale individuelle inférieure à 1mm,
- réalisation plus simple par rapport à une solution de tubes rapportés soudés pour constituer les canaux d'alimentation en vapeur d'eau ou récupération d'hydrogène produit. On peut ainsi avoir un procédé industriel de fabrication plus simple par emboutissage/poinçonnage avec un nombre de soudures total réduit ,
- moindre coût de réalisation: même si un outillage d'emboutissage peut nécessiter initialement un investissement élevé, la réalisation par emboutissage de tôles en très grande série par la suite a l'avantage de baisser le prix de fabrication.

### Référence citée:

[1] : Xiango Li, International Journal of hydrogen Energy 30 (2005) 359-371.

## Revendications

1. Dispositif (8.0) formant un interconnecteur électrique et fluidique pour l'électrolyse de l'eau à haute température consistant en une pièce métallique (80) délimitée par au moins un plan P1, ladite pièce métallique comprenant intérieurement deux chambres (81, 82), superposées l'une sur l'autre par rapport audit plan P1 et une pluralité de trous (810, 820) répartis sur la surface, sensiblement perpendiculaires au plan et divisés en deux groupes, dont un premier groupe de trous (810) débouche à la fois sur le plan P1 et directement dans la chambre (81) adjacente au plan P1 et un second groupe des trous (820) débouche à la fois sur le plan P1 et dans la chambre (82) la plus éloignée par l'intermédiaire de canaux, le plan P1 de 1' interconnecteur étant destiné à venir en contact mécanique avec le plan d'une cathode (2) d'une cellule (c2) d'électrolyse élémentaire formée d'une cathode (2), d'une anode (4), et d'un électrolyte (6) intercalé entre la cathode et l'anode,
dans lequel la pièce métallique comprend deux tôles (90, 91), embouties en partie, la première des deux tôles étant percée dans sa partie plane de manière à former le premier groupe de trous (810) et dans ses parties embouties de manière à former le second groupe de trous (820), chaque embouti (900, 910) des deux tôles étant percé et réalisé en formant un tronc de cône, les emboutis (900) de la première tôle étant de forme complémentaire avec ceux (910) de la deuxième tôle, lesdites première et deuxième tôles étant assemblées entre elles par emboitement mutuel des emboutis en définissant les canaux (83), l'espace délimité par les parties non embouties (901, 911) de la première et deuxième tôles définissant la chambre adjacente (81) au plan P1.

2. Dispositif formant un interconnecteur électrique et fluidique pour l'électrolyse de l'eau à haute température selon la revendication 1, dans lequel la pièce métallique comprend une troisième tôle (92), également emboutie en partie et soudée à la deuxième tôle, les emboutis (920) de la troisième tôle étant non percés et en appui contre la deuxième tôle pour rigidifier ledit interconnecteur et pour permettre le passage du courant électrique, l'espace délimité par les parties non embouties (911, 921) de la deuxième et troisième tôles définissant la chambre (82) superposée à la chambre adjacente (81) au plan P1.

3. Dispositif formant un interconnecteur électrique et fluidique pour l'électrolyse de l'eau à haute température selon la revendication 1 ou 2, dans lequel la première tôle (90) est réalisée à partir d'une tôle plane selon une étape de poinçonnage suivie d'une étape d'emboutissage.

4. Dispositif formant un interconnecteur électrique et fluidique pour l'électrolyse de l'eau à haute température selon l'une des revendications précédentes, dans lequel la deuxième tôle (91) est réalisée à partir d'une tôle plane selon une étape d'emboutissage suivie d'une étape de repoussage.

5. Dispositif formant un interconnecteur électrique et fluidique pour l'électrolyse de l'eau à haute température selon l'une des revendications précédentes, dans lequel la chambre adjacente (81) au plan P1 constitue la chambre par laquelle la vapeur d'eau est amenée et la chambre superposée (82) constitue la chambre de collecte de l'hydrogène produit par l'électrolyse.

6. Module interconnecteur (8) comprenant un premier (8.0) interconnecteur selon l'une des revendications 2 à 5, et un deuxième (8.1) interconnecteur électrique et fluidique consistant en une pièce métallique (84) délimitée par au moins un plan P2, ladite pièce métallique comprenant intérieurement une chambre (85) et une pluralité de trous (850) répartis sur la surface, sensiblement perpendiculaires au plan P2 et débouchant à la fois sur ce dernier P2 et dans la chambre (85),
dans lequel la pièce métallique (84) du deuxième interconnecteur comprend deux tôles (93, 94), dites respectivement quatrième et cinquième tôles, la quatrième tôle (93) étant plane en définissant le plan P2 et percée des trous répartis sur la surface, tandis que la cinquième tôle (94) est emboutie en partie et soudée à la quatrième tôle, les emboutis (940) de la cinquième tôle étant non percés et en appui contre la quatrième tôle pour rigidifier ledit deuxième interconnecteur et pour permettre le passage du courant électrique, l'espace délimité par la quatrième tôle (93) qui est plane et les parties non embouties (941) de la cinquième tôle définissant la chambre (85) sur laquelle débouche la pluralité des trous du deuxième interconnecteur,
dans lequel les troisième et cinquième tôles sont soudées entre elles en définissant le module interconnecteur (8).

7. Module interconnecteur (8) selon la revendication 6, dans lequel les troisième (92) et cinquième (94) tôles présentent une forme identique l'une à l'autre.

8. Module interconnecteur (8) selon la revendication 6 ou 7, dans lequel les troisièmes et cinquième tôle sont soudées dos-à-dos, avec leurs emboutis (920, 940) en regard individuellement les uns avec les autres à la fois pour rigidifier tout le module et pour permettre le passage du courant électrique depuis la première tôle jusqu'à la cinquième tôle.

9. Module interconnecteur (8) selon l'une des revendications 6 à 8, dans lequel toutes les tôles sont soudées par transparence laser.

10. Dispositif d'électrolyse de l'eau à haute température comprenant :
- un empilement de cellules d'électrolyse (C1, C2) élémentaires formées chacune d'une cathode, d'une anode et d'un électrolyte intercalé entre la cathode et l'anode, et
- une pluralité de modules interconnecteurs (8) selon l'une des revendications 6 à 9, chaque module interconnecteur (8) étant agencé entre deux cellules élémentaires adjacentes (C1, C2) tel que le plan P1 du premier interconnecteur est en contact mécanique avec la cathode d'une des deux cellules élémentaires et le plan P2 du deuxième interconnecteur (8.1) est en contact mécanique avec l'anode (4) de l'autre des deux cellules élémentaires le plan P2 du deuxième interconnecteur.

11. Ensemble de production d'hydrogène comprenant une pluralité de dispositifs d'électrolyse selon la revendication 10.

## Patentansprüche

1. Vorrichtung (8.0) zum Bilden einer elektrischen und fluidischen Verbindung für die Hochtemperatur-Wasserelektrolyse, die aus einem Metallteil (80) besteht, das von zumindest einer Ebene P1 begrenzt wird, wobei das Metallteil innen zwei Kammern (81, 82) aufweist, die bezüglich der Ebene P1 übereinander liegen, sowie eine Mehrzahl von Bohrungen (810, 820), die über die Fläche verteilt sind, im Wesentlichen senkrecht zur Ebene verlaufen und in zwei Gruppen aufgeteilt sind, von denen eine erste Gruppe von Bohrungen (810) zugleich auf die Ebene P1 und direkt in die an die Ebene P1 angrenzende Kammer (81) ausmündet und eine zweite Gruppe von Bohrungen (820) zugleich auf die Ebene P1 und in die weiter entfernt liegende Kammer (82) über Kanäle ausmündet, wobei die Ebene P1 der Verbindung dazu bestimmt ist, mit der Ebene einer Kathode (2) einer Elementar-Elektrolyse-Zelle (c2) mechanisch in Kontakt zu gelangen, die aus einer Kathode (2), einer Anode (4) und einem Elektrolyt (6) gebildet ist, der zwischen Kathode und Anode eingesetzt ist,
wobei das Metallteil zwei teilweise tiefgezogene Bleche (90, 91) aufweist, wobei das erste der beiden Bleche in seinem flachen Bereich so durchbohrt ist, dass es die erste Gruppe von Bohrungen (810) bildet und in seinen tiefgezogenen Bereichen so durchbohrt ist, dass es die zweite Gruppe von Bohrungen (820) bildet, wobei jeder Stulp (900, 910) der beiden Bleche durchbohrt und unter Bildung eines Kegelstumpfs ausgebildet ist, wobei die Stulpen (900) des ersten Blechs eine komplementäre Form zu denen (910) des zweiten Blechs haben, wobei das erste und das zweite Blech durch Ineinandergreifen der Stulpen und unter Bildung der Kanäle (83) zusammengefügt sind, wobei der von den nicht tiefgezogenen Bereichen (901, 911) des ersten und des zweiten Blechs eingegrenzte Raum die an die Ebene P1 angrenzende Kammer (81) definiert.

2. Vorrichtung zum Bilden einer elektrischen und fluidischen Verbindung für die Hochtemperatur-Wasserelektrolyse nach Anspruch 1, wobei das Metallteil ein drittes Blech (92) aufweist, das auch teilweise tiefgezogen und mit dem zweiten Blech verschweißt ist, wobei die Stulpen (920) des dritten Blechs nicht durchbohrt und in Anlage an dem zweiten Blech sind, um die Verbindung zu versteifen und den Durchtritt des elektrischen Stroms zu gestatten, wobei der von den nicht tiefgezogenen Teilen (911, 921) des zweiten und des dritten Blechs eingegrenzte Raum die Kammer (82) definiert, die der an die Ebene P1 angrenzenden Kammer (81) überlagert ist.

3. Vorrichtung zum Bilden einer elektrischen und fluidischen Verbindung für die Hochtemperatur-Wasserelektrolyse nach Anspruch 1 oder 2, wobei das erste Blech (90) aus einem flachen Blech mit einem Schritt des Stanzens, gefolgt von einem Schritt des Tiefziehens, hergestellt ist.

4. Vorrichtung zum Bilden einer elektrischen und fluidischen Verbindung für die Hochtemperatur-Wasserelektrolyse nach einem der vorangehenden Ansprüche, wobei das zweite Blech (91) ausgehend von einem flachen Blech mit einen Schritt des Tiefziehens, gefolgt von einem Schritt des Drückens, herstellt ist.

5. Vorrichtung zum Bilden einer elektrischen und fluidischen Verbindung für die Hochtemperatur-Wasserelektrolyse nach einem der vorangehenden Ansprüche, wobei die an die Ebene P1 angrenzende Kammer (81) diejenige Kammer bildet, über welche der Wasserdampf zugeführt wird, und die übergelagerte Kammer (82) die Sammelkammer zum Sammeln von bei der Elektrolyse erzeugtem Wasserstoff bildet.

6. Verbindungsmodul (8) mit einer ersten Verbindung (8.0) nach einem der Ansprüche 2 bis 5 und mit einer zweiten elektrischen und fluidischen Verbindung (8.1), die aus einem Metallteil (84) besteht, das von zumindest einer Ebene P2 begrenzt wird, wobei das Metallteil innen eine Kammer (85) und eine Mehrzahl von Bohrungen (850) aufweist, die über die Fläche verteilt sind, im Wesentlichen senkrecht zur Ebene P2 verlaufen und zugleich auf die letztgenannte Ebene P2 und in die Kammer (85) ausmünden,
wobei das Metallteil (84) der zweiten Verbindung zwei Bleche (93, 94) aufweist, viertes bzw. fünftes Blech genannt, wobei das vierte Blech (93) flach ist und dabei die Ebene P2 definiert und mit Bohrungen versehen ist, die über die Fläche verteilt sind, während das fünfte Blech (94) teilweise tiefgezogen und mit dem vierten Blech verschweißt ist, wobei die Stulpen (940) des fünften Blechs nicht durchbohrt sind und am vierten Blech anliegen, um die zweite Verbindung zu versteifen und den Durchtritt des elektrischen Stroms zu gestatten, wobei der von dem vierten, flachen Blech (93) und den nicht tiefgezogenen Teilen (941) des fünften Blechs eingegrenzte Raum die Kammer (85) definiert, auf die die Mehrzahl an Bohrungen der zweiten Verbindung ausmündet,
wobei das dritte und das fünfte Blech miteinander verschweißt sind und dabei das Verbindungsmodul (8) bilden.

7. Verbindungsmodul (8) nach Anspruch 6, wobei das dritte (92) und das fünfte (94) Blech eine zueinander identische Form aufweisen.

8. Verbindungsmodul (8) nach Anspruch 6 oder 7, wobei das dritte und das fünfte Blech Rücken-an-Rücken verschweißt sind und mit ihren Stulpen (920, 940) einzeln einander gegenüberliegen, um zugleich das gesamte Modul zu versteifen und um den Durchtritt des elektrischen Stroms von dem ersten Blech bis zum fünften Blech zu gestatten.

9. Verbindungsmodul (8) nach einem der Ansprüche 6 bis 8, wobei sämtliche Bleche durch Lasertransparenz verschweißt sind.

10. Vorrichtung zur Hochtemperatur-Wasserelektrolyse, enthaltend:
- ein Paket von Elementar-Elektrolyse-Zellen (C1, C2), die jeweils aus einer Kathode, einer Anode und einem Elektrolyt gebildet ist, der zwischen Kathode und Anode eingesetzt ist, und
- eine Mehrzahl von Verbindungsmodulen (8) nach einem der Ansprüche 6 bis 9, wobei jedes Verbindungsmodul (8) zwischen zwei aneinandergrenzenden Elementarzellen (C1, C2) so angeordnet ist, dass die Ebene P1 der ersten Verbindung mechanisch in Kontakt mit der Kathode einer der beiden Elementarzellen ist und die Ebene P2 der zweiten Verbindung (8.1) mechanisch in Kontakt mit der Anode (4) der anderen der beiden Elementarzellen ist.

11. Anordnung zum Erzeugen von Wasserstoff, enthaltend eine Mehrzahl von Elektrolyse-Vorrichtungen nach Anspruch 10.

## Claims

1. Device (8.0) forming an electrical and fluid interconnector for water electrolysis at high temperature comprising a metallic part (80) delimited by at least one plane P1, said metallic part comprising two internal chambers (81, 82), superposed one on the other relative to said plane P1 and a plurality of holes (810, 820) distributed on the surface, approximately perpendicular to the plane and divided into two groups, of which a first group of holes (810) opens up both onto the plane P1 and directly into the chamber (81) adjacent to the plane P1 and a second group of holes (820) opens up both onto the plane P1 and into the furthest chamber (82) through channels, the plane P1 of the interconnector being designed to come into mechanical contact with the plane of a cathode (2) of an elementary electrolysis cell (c2) formed by a cathode (2), an anode (4), and an electrolyte (6) inserted between the cathode and the anode,
in which the metallic part comprises two partly stamped plates (90, 91), the first of the two plates being perforated on its plane part so as to form the first group of holes (810) and in its stamped parts so as to form a second group of holes (820), each stamped part (900, 910) of the two plates being perforated and made to form a truncated cone, the stamped parts (900) of the first plate having shapes complementary to the shapes of the stamped parts (910) of the second plate, said first and second plates being assembled to each other by mutual nesting of the stamped parts defining channels (83), the space delimited by the unstamped parts (901, 911) of the first and the second plates defining the chamber (81) adjacent to the plane P1.

2. Device forming an electrical and fluid interconnector for water electrolysis at high temperature according to claim 1, in which the metallic part comprises a third plate (92), also partly stamped and welded to the second plate, the stamped parts (920) of the third plate not being perforated and being in contact with the second plate to increase the stiffness of said interconnector and to enable the passage of electrical current, the space delimited by the unstamped parts (911, 921) of the second and third plates defining the chamber (82) superposed on the chamber (81) adjacent to the plane P1.

3. Device forming an electrical and fluid interconnector for water electrolysis at high temperature according to claim 1 or 2, in which the first plate (90) is made from a plane plate using a punching step followed by a stamping step.

4. Device forming an electrical and fluid interconnector for water electrolysis at high temperature according to one of the previous claims, in which the second plate (91) is made from a plane plate using a stamping step followed by an embossing step.

5. Device forming an electrical and fluid interconnector for water electrolysis at high temperature according to one of the previous claims, in which the chamber (81) adjacent to the plane P1 forms the chamber through which steam is supplied and the superposed chamber (82) forms the chamber in which hydrogen produced by electrolysis is collected.

6. Interconnecting module (8) comprising a first interconnector (8.0) according to one of claims 2 to 5, and a second electric and fluid interconnector (8.1) comprising a metal part (84) delimited by at least one plane P2, said metallic part comprising an internal chamber (85) and a plurality of holes (850) distributed on the surface, approximately perpendicular to the plane P2 and opening up onto this plane P2 and also into the chamber (85),
in which the metallic part (84) of the second interconnector comprises two plates (93, 94), called the fourth and fifth plates respectively, the fourth plate (93) being plane and defining plane P2 and through which holes distributed on the surface are perforated, while the fifth plate (94) is partly stamped and welded to the fourth plate, the stamped parts (940) of the fifth plate not being perforated and bearing in contact with the fourth plate to increase the stiffness of said second interconnector and to enable electrical current to pass, the space delimited by the fourth plate (93) which is plane and the unstamped parts (941) of the fifth plate defining the chamber (85) onto which the plurality of holes in the second interconnector open up,
in which the third and fifth plates are welded to each other defining the interconnecting module (8).

7. Interconnecting module (8) according to claim 6, in which the third (92) and fifth (94) plates have the same shape as each other.

8. Interconnecting module (8) according to claim 6 or 7, in which the third and fifth plates are welded back to back, with their stamped parts (920, 940) individually facing each other to stiffen the entire module and also to enable electrical current to pass from the first plate to the fifth plate.

9. Interconnecting module (8) according to one of claims 6 to 8, in which all plates are welded by laser transparency.

10. Device for high temperature electrolysis of water comprising:
- a stack of elementary electrolysis cells (C1, C2) each formed by a cathode, an anode and an electrolyte inserted between the cathode and the anode, and
- a plurality of interconnecting modules (8) according to one of claims 6 to 9, each interconnecting module (8) being arranged between two adjacent elementary cells (C1, C2) such that the plane P1 of the first interconnector is in mechanical contact with the cathode of one of the two elementary cells and the plane P2 of the second interconnector (8.1) is in mechanical contact with the anode (4) of the other of the two elementary cells in plane P2 of the second interconnector.

11. Hydrogen production assembly comprising a plurality of electrolysis devices according to claim 10.
